# EUROPÄISCHE PATENTSCHRIFT

(11) **EP 0 476 289 B1**
(45) Veröffentlichungstag und Bekanntmachung des Hinweises auf die Patenterteilung: **27.03.1996**
(21) Anmeldenummer: 91113117.5
(22) Anmeldetag: 05.08.1991
(51) Int. Cl.: E04B 2/96, E04F 13/08, F16B 7/04

(54) **Fassadenkonstruktion aus einer Tragkonstruktion mit davorgesetzter Fassadenprofilkonstruktion**
Façade construction comprising a support structure with a profile structure fixed on the front
Construction de façade comprenant une structure de support à structure profilée fixée à lavant

(30) Priorität: 14.08.1990 DE 9011805 U
(43) Veröffentlichungstag der Anmeldung: 25.03.1992
(73) Patentinhaber: W. HARTMANN & CO (GMBH & CO), D-20459 Hamburg (DE)
(72) Erfinder: Hendel, Alfred, W-8500 Nürnberg 10 (DE); Anzengruber, Peter, W-8500 Nürnberg (DE)
(74) Vertreter: Tergau, Enno, Dipl.-Ing.

(56) Entgegenhaltungen:
- DE-A- 3 528 316
- DE-A- 3 636 637
- DE-A- 3 732 534
- DE-U- 8 705 452
- US-A- 3 357 145

## Beschreibung

Die Erfindung betrifft eine Fassadenkonstruktion mit den im Oberbegriff des Anspruches 1 genannten Merkmalen. Derartige, aus einer Tragkonstruktion mit vorgesetzter Fassadenprofilkonstruktion bestehende Fassadenkonstruktionen sind vielfältig bekannt. Die in der Regel aus Tragpfosten bestehende Tragkonstruktion ist bei derartigen Fassadenkonstruktionen die eigentliche tragende Einheit, während die aus Pfosten- und Sprossenprofilen bestehende Fassadenprofilkonstruktion vor die Tragkonstruktion gesetzt ist. Die Fassadenprofilkonstruktion, welche im allgemeinen zur Aufnahme von Flächenelementen, insbesondere von Glaselementen dient, ist vor die Tragkonstruktion gestellt und mittels Verbindungsprofilen mit der Tragkonstruktion verbunden.

Die Fassadenprofilkonstruktion wird von der Tragkonstruktion eigentlich mehr gehalten als getragen. Die Tragkonstruktion nimmt nämlich vorwiegend die im wesentlichen senkrecht auf die Oberflächen der Fassadenelemente wirkenden Zug- und Druckkräfte auf. Die Fassadenprofilkonstruktion ist in der in Längsrichtung der Tragpfosten bzw. Pfostenprofile verlaufenden Vertikalen dadurch abgestützt, daß sie direkt auf dem Boden aufliegt, also in vertikaler Richtung im wesentlichen vom Boden getragen.

Bei Fassadenkonstruktionen nach dem Stand der Technik sind die zwischen den Tragpfosten und den Pfostenprofilen eingebrachten Verbindungsprofile mit ihrer tragpfostenseitigen Stirnseite am Tragpfosten in vertikaler Längsrichtung sowie in horizontal dazu verlaufender Querrichtung unverschiebbar befestigt. Diese Befestigung ist meistens als Schraub- oder Schweißverbindung realisiert, obgleich auch andere Verbindungsarten denkbar sind. Mit ihrer pfostenprofilseitigen Stirnseite sind die Verbindungsprofile in Pfostenprofillängsrichtung und -querrichtung unverrückbar mit dem Pfostenprofil verbunden. Auch hier ist die Verbindung in der Regel als Schweiß- bzw. Schraubverbindung realisiert.

Ferner existieren aus zwei Teilprofilen bestehende Verbindungsprofilvarianten. Hierbei sind die Teilprofile jeweils am Pfostenprofil und am Tragpfosten vormontiert und werden über eine der vorgenannten Verbindungsarten miteinander verbunden.

Geschweißte Verbindungen zwischen Verbindungsprofilen und Tragpfosten bzw. Pfostenprofilen haben neben den schweißspezifischen Gefügeänderungen im Profilwerkstoff weiterhin den Nachteil eines hohen maschinellen Aufwandes auf der Baustelle. Ferner müssen die Pfostenprofile und die Tragpfosten sowie die Verbindungsprofile zuerst provisorisch in ihre Montageendstellung gebracht werden, um schließlich miteinander verschweißt werden zu können.

Ein aus zwei Teilprofilen bestehendes Verbindungsprofil ist beispielsweise bekannt aus der DE-A-36 36 637, die die Merkmale des Oberbegriffes des Anspruchs 1 aufweist. Das dortige Verbindungsprofil verbindet zwei Profilkonstruktionen mit vertikalem Abstand. Das Profil besteht aus zwei zahnstangenartigen Flanschteilen, die im Montageendzustand kämmend ineinandergreifen und mittels einer Schraube miteinander verschraubt sind. Nachteilig an diesem bekannten Verbindungsprofil ist einerseits die Vielzahl der Einzelteile, die zu seinem Aufbau benötigt werden. Nachteilig ist andererseits, daß die Spannkraft der Spannschraube die beiden Flanschteile nur punktförmig beaufschlagt.

Ausgehend von diesen Nachteilen liegt der Erfindung die Aufgabe zugrunde, die Befestigung der Verbindungsprofile an den Pfostenprofilen zu vereinfachen und insbesondere ihre leichte Verstellbarkeit in Längsrichtung der Pfostenprofile zu gewährleisten und eine gleichmäßige Kräfteverteilung an den Verbindungsprofilen in Montageendstellung zu erreichen. Diese Aufgabe ist durch die Merkmalskombination des Patentanspruchs 1 gelöst.

Die Fassadenkonstruktion weist hierfür einen mit dem Tragpfosten verschraubten, plattenförmigen Verbindungsflansch auf. In die dem Tragpfosten zugewandte Seite des Pfostenprofils sind Profilnuten eingeformt. In die Profilnuten werden Verbindungslaschen eingeführt, die zur Montage in Längsrichtung der Pfostenprofile verschiebbar sind, nach dem Verspannen mit dem Verbindungsflansch jedoch in Längsrichtung am Pfostenprofil fixiert angebracht sind. Zwischen den Verbindungslaschen ist der Verbindungsflansch eingespannt, wobei die Verbindungslaschen und der Plattenteil des Verbindungsflansches im gespannten Zustand parallel zueinander verlaufen. Die miteinander kämmenden Verzahnungen auf den Plattenteilaußenseiten und den Verbindungslascheninnenseiten gewährleisten eine besonders verrutschsichere, den Abstand zwischen den Tragpfosten und den Pfostenprofilen dauerhaft sicherstellende Verbindung zwischen Pfostenprofil und Tragpfosten.

Vorteilhaft an der erfindungmäßigen Konstruktion ist der hohe Grad der Vormontage im Hause des Profilherstellers. Die Verbindungflansche können nämlich bereits an den Tragpfosten vormontiert zusammen mit diesen zur Baustelle geliefert werden. Weiterhin vorteilhaft ist, daß die Fassadenprofile in variablem Abstand zu den Tragpfosten aufgestellt werden können und eventuelle Fertigungstoleranzen der Tragkonstruktion hierdurch kompensierbar sind.

Zur Montage der Fassadenprofilkonstruktion müssen die Verbindungslaschen lediglich in den Profilnuten in die den Verbindungsflanschen entsprechende Position in Längsrichtung verfahren werden. Mit dem Verspannen der Verbindungslaschen und dem Verbindungsflansch ist auch gleichzeitig die Längsverschiebbarkeit der Verbindungslaschen aufgehoben, wodurch diese in ihrer Stellung bezüglich der Längsrichtung ortsfest fixiert sind.

Durch die im Anspruch 2 geschilderte Maßnahme ist es möglich, die Verbindung zwischen den Verbindungslaschen und dem Verbindungsflansch durch eine einfache Spannschraube zu realisieren.

Die in den Ansprüchen 2 bis 4 geschilderten Maßnahmen betreffen die Verwendung eines T-förmigen Verbindungsflansches, welcher einerseits als Standard bauteil im Handel erworben werden kann und andererseits einfach stranggepreßt werden kann. Ein derartiger Verbindungsflansch kann beim Herstellungsprozeß der Tragpfosten einfach mit diesen verschraubt werden.

Ferner paßt sich die plattenförmige Ausgestaltung des Plattenteils besonders harmonisch in die erfindungsmäßige Fassadenkonstruktion ein.

Die Ausführung des Verbindungflansches nach Anspruch 5 schafft zusätzlich die Möglichkeit des Einsatzes von zylindrischen Tragpfosten mit einer weitgehend runden Querschnittsform.

Die Ausführung der Fassadenkonstruktion nach den Ansprüchen 6 bis 10 bezieht sich auf eine vorteilhafte Ausführung der Profilnut als Profilnutpaar zweier bezüglich der Mittellängsachse des Pfostenprofils symmetrischer Profilnuten. Die Verbindungslaschen können bei dieser Ausführung von der den Tragpfosten zugewandten Seiten her einfach in die Profilnuten eingeschoben werden, in ihre Endposition verfahren werden und mit dem Verspannen des Verbindungsflansches mit den Verbindungslaschen in den Profilnuten verspannt werden.

Die zusätzlich in den Profilnuten angebrachten Biegestege nach Anspruch 11 dienen der zusätzlichen Sicherung der Endposition der Verbindungslaschen in Längsrichtung.

Die in den Ansprüchen 13 bis 17 geschilderten Maßnahmen beschreiben eine Ausgestaltungsform der Befestigungsenden der Verbindungslaschen, die einerseits besonders mit der in den Ansprüchen 6 bis 10 geschilderten Ausgestaltung der Profilnuten harmoniert und andererseits ein hohes Maß an Verschiebesicherheit der Verbindungslaschen in Längsrichtung gewährleistet.

Die in den Ansprüchen 18 und 19 beschriebene Auslegung der Wandstärken an den Verbindungslaschen ist bei Aufrechterhaltung der vollen Funktionstüchtigkeit der Konstruktion besonders materialsparend.

Die in Anspruch 20 beschriebenen Klemmdorne sichern die Verbindungslaschen zusätzlich in ihrer Montageendstellung.

Zusammenfassend sei nochmals betont, daß bei der vorliegenden Erfindung ein Anbohren des Pfostenprofils auf der Baustelle obsulet ist und die Montage der Fassadenkonstruktion durch ein einfaches Einstecken der Verbindungslaschen in die Profilnuten und das anschließende Verschrauben mit dem Verbindungsflansch montierbar ist. Die Profilnuten können gleichwohl auch im Tragpfosten eingeformt sein, während der Verbindungsflansch mit dem Pfostenprofil verschraubt ist.

Die Erfindung wird anhand der in den Zeichnungen dargestellten Ausführungsbeispiele mit weiteren erfindungswesentlichen Merkmalen detailliert beschrieben. Es zeigen:
- Fig. 1: eine perspektivische Darstellung eines mit einem Verbindungslaschenpaar verspannten Verbindungsflansches an einem Pfostenprofil.

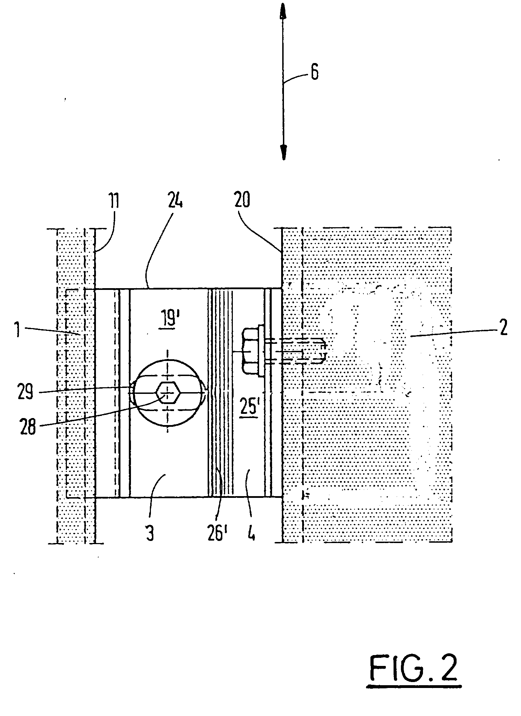

- Fig. 2: eine Seitenansicht der Fassadenkonstruktion mit jeweils angedeutetem Tragpfosten und Pfostenprofil.
- Fig. 3: eine Querschnittsdarstellung der Fassadenkonstruktion, gesehen von oben.
- Fig. 4: eine von oben gesehene Querschnittsdarstellung des teilweise dargestellten Pfostenprofils mit eingeschobenen Verbindungslaschen vor dem Verspannen.
- Fig. 5: eine Ansicht gemäß Fig. 4 mit teilweise verspannten Verbindungslaschen.
- Fig. 6: eine Ansicht nach den Fig. 4 und 5 mit vollständig verspannten Verbindungslaschen.

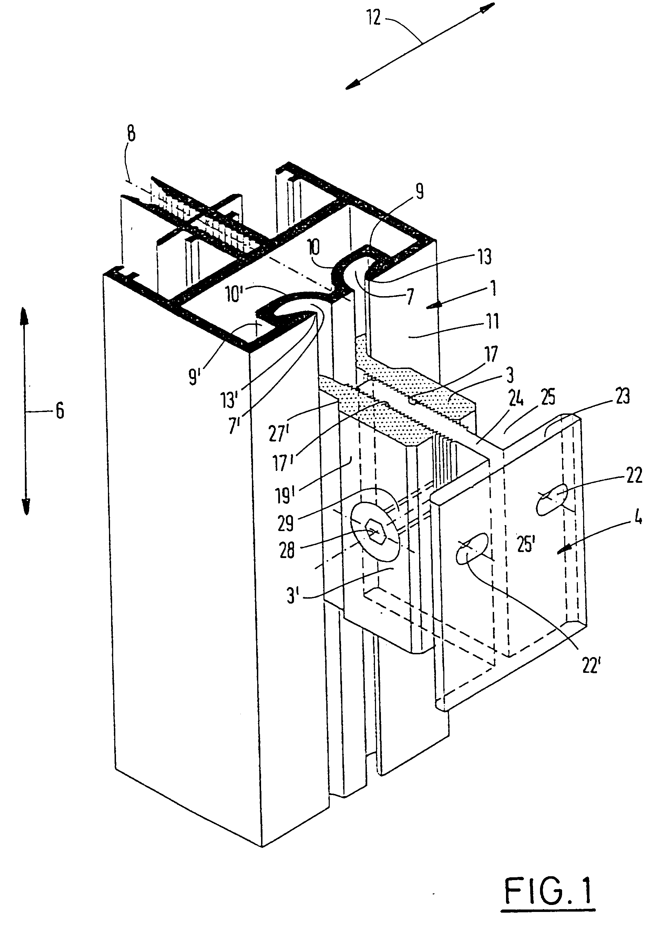

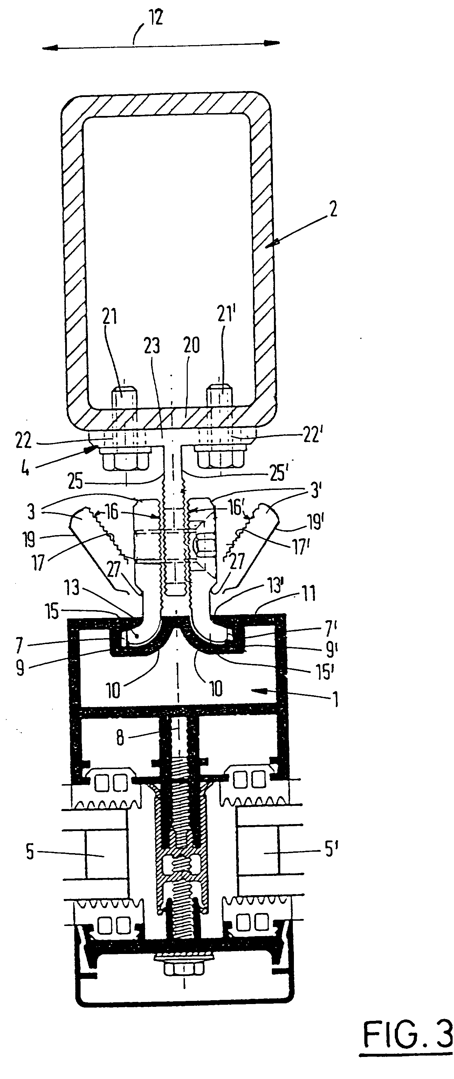

Die Fassadenkonstruktion besteht im wesentlichen aus dem in Fig. 1 dargestellten Pfostenprofil 1, dem in Fig. 3 dargestellten Tragpfosten 2 und den Verbindungslaschen 3,3' sowie dem Verbindungsflansch 4. Das Pfostenprofil 1 trägt auf seiner den Tragpfosten 2 abgewandten Seite die Fassadenelemente 5,5'.

In die dem Tragpfosten 2 zugewandte Seite des Pfostenprofils 1 sind die in Längsrichtung 6 des Pfostenprofils 1 verlaufenden Profilnuten 7,7' eingeformt. Die Profilnuten 7,7' sind bezüglich der senkrecht zur Längsrichtung 6 verlaufenden, zwischen der Fassadenseite und der Tragpfostenseite des Pfostenprofils 1 sich erstreckenden Vertikalachse 8 im Querschnitt achsensymmetrisch, spiegelbildlich zueinander ausgeführt.

Das Profilnutenpaar 7,7' weist einen W-förmigen Querschnitt auf (Fig. 3). Die Außenschenkel 9,9' dieses W-förmigen Querschnitts verlaufen parallel zur Vertikalachse 8. Die Innenschenkel 10,10' des W-förmigen Querschnitts verlaufen nach Art eines auf den Kopf gestellten V vom Schnittpunkt der Vertikalachse 8 mit der dem Tragpfosten 2 zugewandten Profilseite 11 des Pfostenprofils 1 zu den der Profilseite 11 abgewandten Enden der Außenschenkel 9,9'. Die Innenschenkel 10,10' weisen hierbei eine konkave, ausgerundete Form auf. Auf der Profilseite 11 stehen sich in der senkrecht zur Vertikalachse 8 und ebenfalls senkrecht zur Längsrichtung 6 verlaufenden Querrichtung 12 erstreckend zwei einander zugewandte Vorsprünge 13,13' nach Art von Hinterschneidungen in die Profilnuten 7,7' hinein. Die Vorsprünge 13,13' verlaufen auf ihrer dem Tragpfosten 2 zugewandten Seite parallel und einebig mit der Profilseite 11 des Pfostenprofils 1, während sie auf ihrer dem Tragpfosten 2 abgewandten Seite einen in Richtung auf den Hohlquerschnitt der Profilnut 7,7' konkaven Verlauf aufweisen. Die Vorsprünge 13,13' sind also entsprechend den Innenschenkeln 10,10' ausgerundet. Die Profilnuten 7,7' weisen dadurch einen gebogenen, etwa einem Viertelkreis entsprechenden Hohlquerschnitt auf. Dieser Hohlquerschnitt läuft in sich sich etwa konisch verjüngend von den Öffnungen der Profilnuten 7,7' in der Profilseite 11 beginnend auf die den Profilnuten 7,7' zugewandten Innenseiten der Außenschenkel 9,9' zu. In den Hohlquerschnitt der Profilnuten 7,7' ragen nahe den Außenschenkeln 9,9' die parallel zu den Außenstegen 9,9' verlaufenden Biegestege 14,14' in den Hohlquerschnitt hinein.

Die Verbindungslaschen 3,3' sind mit ihren Befestigungsenden 15,15' in den Profilnuten 7,7' fixiert. Die einander zugewandten Innenseiten 16,16' der Verbindungslaschen 3,3' tragen jeweils eine Verzahnung 17,17', deren Zähne als in Querrichtung 12 aus den Innenseiten 16,16' vorstehende Profilspitzen ausgebildet sind, die sich nach Art von Rippen in Längsrichtung 6 erstrecken. An die Verzahnung 17,17' schließt sich in Richtung auf das jeweilige Befestigungsende 15,15' der aus der jeweiligen Innenseite 16,16' etwa rechtwinklig vorstehende Klemmdorn 18,18' an.

Die Befestigungsenden 15,15' sind derart hakenförmig abgebogen, daß sie etwa senkrecht aus den Außenseiten 19,19' der Verbindungslaschen 3,3' hinausstehen. Die Volumenquerschnittsform der Befestigungsenden 15,15' entspricht der Hohlform des Hohlquerschnitts der Profilnuten 7,7'. Die Abmessungen sind derart aufeinander abgestimmt, daß die Befestigungsenden 15,15' nach Art von Preßfassungen in den Hohlquerschnitte greifen können.

Der einen rechteckförmigen Querschnitt aufweisende Tragpfosten 2 ist an seiner dem Pfostenprofil 1 zugewandten Querseite 20 von zwei Halteschrauben 21,21' durchsetzt. Mit den Halteschrauben 21,21' ist der T-förmige Verbindungsflansch 4 am Tragpfosten angeschraubt. Der Verbindungsflansch 4 weist hierzu zwei sich in Querrichtung 12 erstreckende Langlöcher 22,22' auf, welche von den Halteschrauben 21,21' ebenfalls durchsetzt sind. Der Verbindungsflansch 4 besteht aus seinem den Querbalken der T-Form bildenden, im Montageendzustand parallel und einebig zur Querseite 20 des Tragpfostens 2 verlaufenden Flanschteil 23 und seinem aus dem Flanschteil 23 senkrecht in Richtung auf das Pfostenprofil abstehenden Plattenteil 24. Das Plattenteil 24 bildet den Vertikalbalken der T-Form. Die Plattenebene des Plattenteils 24 erstreckt sich im Montageendzustand in der vom Pfostenprofil 1 und vom Tragpfosten 2 aufgespannten Ebene. Auf seinen beiden einander abgewandten Plattenaußenseiten 25,25' trägt das Plattenteil 24 jeweils eine Geradverzahnung 26,26', deren Zähne nach Art von Profilspitzen senkrecht aus den Plattenaußenseiten 25,25' hinausstehen und sich rippenartig in Längsrichtung 6 erstrecken.

Der Zusammenbau des Verbindungslaschenpaars 3,3' mit dem Verbindungsflansch 4 sei im folgenden kurz beschrieben:

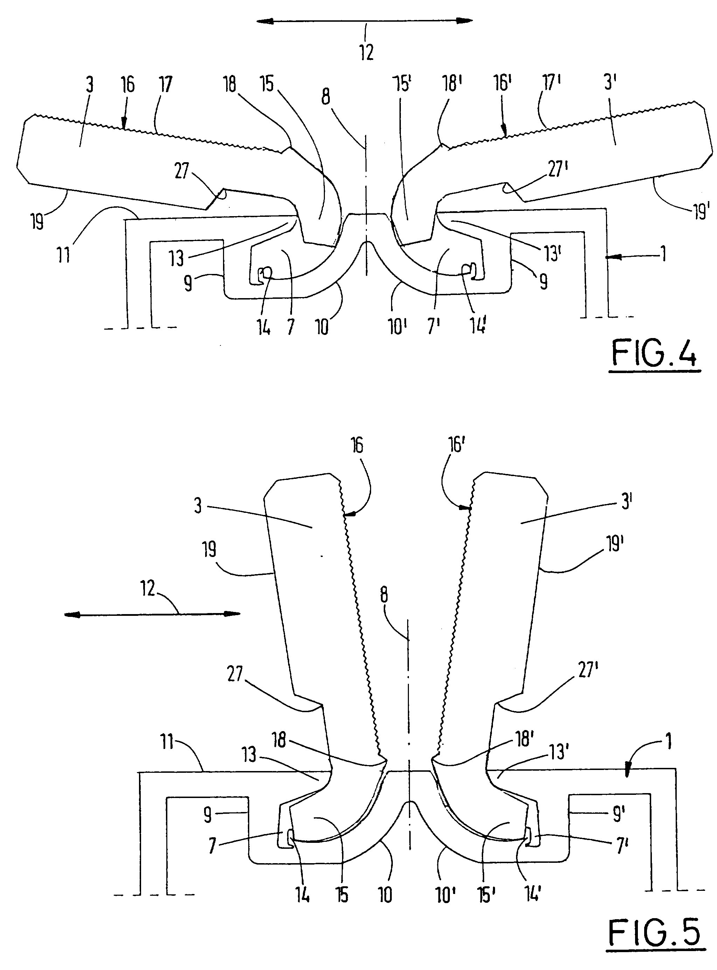

Die Verbindungslaschen 3,3' werden mit ihren Befestigungsenden 15,15' von der Profilseite 11 her in die Profilnuten 7,7' eingeschoben (= Einschubstellung). Sie verlaufen nahezu parallel zur Profilseite 11, wozu in ihren den Befestigungsenden 15,15' benachbarten Bereichen der Außenseiten 19,19' Kröpfungen 27,27' eingeformt sind. Aufgrund dieser Kröpfungen 27,27' weisen die Verbindungslaschen 3,3' an ihren Befestigungsenden 15,15' einen gegenüber dem übrigen Wanddickenquerschnitt verringerten Wanddickenquerschnitt auf. Die derart in die Profilnuten 7,7' eingeschobenen Verbindungslaschen 3,3' werden in Längsrichtung 6 auf die durch den am Tragpfosten 2 über die Halteschrauben 21,21' befestigten Verbindungsflansch 4 vorgegebene Höhe verschoben (Fig. 4).

Ist diese Höhe in Längsrichtung 6 des Verbindungsflansches 4 erreicht, werden die Verbindungslaschen 3,3' mit ihren Innenseiten 16,16' aufeinander zu geschwenkt, so daß jeweils eine Innenseite 16,16' eine Plattenaußenseite 25,25' flankiert. Bevor die Innenseiten 16,16' parallel zu den Plattenaußenseiten 25,25' verlaufen, erreichen die Verbindungslaschen 3,3' eine in Fig. 5 dargestellte Zwischenstellung. Die Befestigungsenden 15,15' stoßen hierbei an die Biegestege 14,14' und die Innenseiten 16,16' liegen mit den Klemmdornen 18,18' an der Profilseite 11 an.

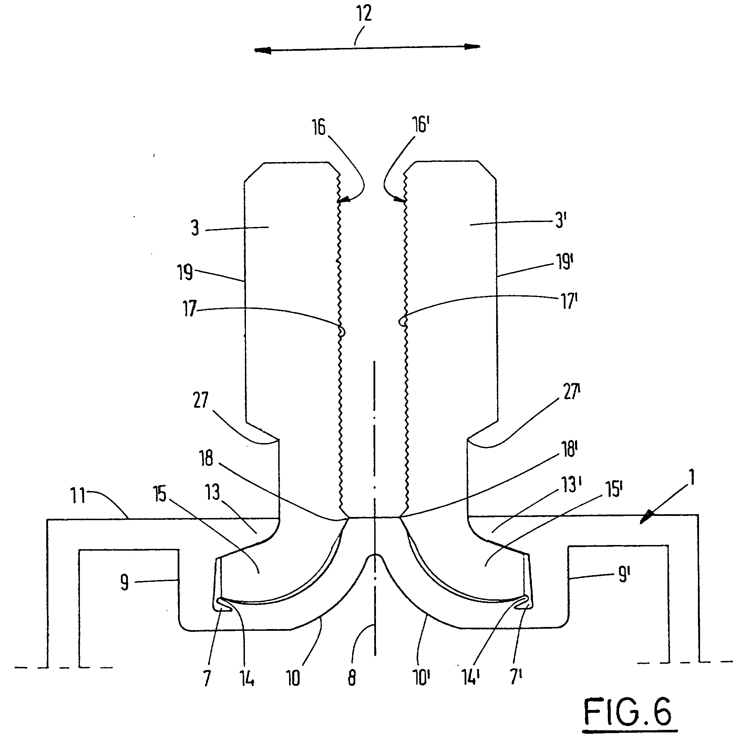

Durch das in Fig. 6 dargestellte Verschwenken der Verbindungslaschen 3,3' in ihre Montageendstellung, die Verspannstellung, geraten die Verbindungslaschen 3,3'mit dem Plattenteil 24 des Verbindungsflansches 4 in eine parallele Stellung. Die Biegestege 14,14' werden hierbei von den Befestigungsenden 15,15' derart abgebogen, daß sie etwa in Querrichtung 12 weisen. Gleichzeitig graben sich die Klemmdorne 18,18' von der Profilseite 11 her in die Wände der Profilnuten 7,7' ein und verkeilen somit die Verbindungslaschen 3,3' in den Profilnuten 7,7'. Aufgrund der sich konisch verjüngenden Form des Hohlquerschnitts der Profilnuten 7,7' und der presspassungsartig aufeinander abgestimmten Abmessungen der Hohlquerschnitte der Profilnuten 7,7' einerseits und der Volumenquerschnitte der Befestigungsenden 15,15' andererseits sitzen die Befestigungsenden 15,15' gepreßt in den Profilnuten 7,7' ein (Fig. 6).

Wie in Fig. 1 dargestellt greifen die Verzahnungen 17,17' auf den Innenseiten 16,16' der Verbindungslaschen 3,3' kämmend in die Geradverzahnungen 26,26' auf den Plattenaußenseiten 25,25' ein. Der Verbindungsflansch 4 ist hierdurch gegenüber den Verbindungslaschen 3,3' in Richtung der Vertikalachse 8 nicht mehr bewegbar.

Zur dauerhaften Sicherung der Montageendstellung bzw. zum Verspannen der Verbindungslaschen 3,3' mit dem Verbindungsflansch 4 wird eine in Querrichtung 12 verlaufende Spannschraube 28 in die Fassadenkonstruktion eingebracht. Die als Innensechskantschraube ausgeführte Spannschraube 28 durchsetzt die Verbindungslaschen 3,3' sowie den Verbindungsflansch 4 in zentral angeordneten, in Querrichtung 12 verlaufenden und miteinander fluchtenden Durchgangsbohrungen 29. Die Spannschraube 28 wird mit einer in den Zeichnungen nicht dargestellten Mutter derart vorgespannt, daß eine kraftschlüssige Verbindung zwischen den Verbindungslaschen 3,3' und dem Verbindungsflansch 4 entsteht. Die Spannschraube 28 dient folglich als Spannwerkzeug, um die Verbindungslaschen 3,3' aus der Einschubstellung in die Verspannstellung zu überführen. In der Verspannstellung bildet die Spannschraube 28 einen dauerhaften Form- und Kraftschluß zwischen den Verbindungslaschen 3,3' und dem Verbindungsflansch 4.

### Bezugszeichenliste

- 1: Pfostenprofil
- 2: Tragpfosten
- 3'3: Verbindungslasche
- 4: Verbindungsflansch
- 5,5': Fassadenelement
- 6: Längsrichtung
- 7,7': Profilnut
- 8: Vertikalachse
- 9,9': Außenschenkel
- 10,10': Innenschenkel
- 11: Profilseite
- 12: Querrichtung
- 13,13': Vorsprung
- 14,14': Biegesteg
- 15,15': Befestigungsende
- 16,16': Innenseite
- 17,17': Verzahnung
- 18,18': Klemmdorn
- 19,19': Außenseite
- 20: Querseite
- 21,21': Halteschraube
- 22,22': Langloch
- 23: Flanschteil
- 24: Plattenteil
- 25,25': Plattenaußenseite
- 26,26': Gradverzahnung
- 27,27': Kröpfung
- 28: Spannschraube
- 29: Durchgangsbohrung

## Patentansprüche

1. Fassadenkonstruktion
a) mit einer Tragpfosten (2) enthaltenden Tragkonstruktion,
b) mit einer vor die Tragkonstruktion gesetzten, mit den Tragpfosten (2) verbundenen Fassadenprofilkonstruktion aus Pfosten- (1) und Sprossenprofilen und
c) mit an den Tragpfosten (2) befestigten Verbindungsflansche (4) derart,
aa) daß die Verbindungsflansche (4) ein sich in der von den Pfostenprofilen (1) und den Tragprofilen (2) aufgespannten Ebene erstreckendes Plattenteil (24) aufweisen und
bb) daß das Plattenteil (24) auf seinen Plattenaußenseiten (25,25') jeweils eine Geradverzahnung (26,26') trägt, deren Zähne von parallelen, in Längsrichtung (6) des Tragpfostens (2) und des Pfostenprofils (1) verlaufenden Profilrippen gebildet sind,
gekennzeichnet
d) durch in die den Tragpfosten (2) zugewandten Profilseiten (11) der Pfostenprofile (1) eingeformte und in deren Längsrichtung (6) verlaufende Profilnuten (7,7')
e) durch jeweils zwei in den Profilnuten (7,7') längsverschieblich geführte, ein Verbindungslaschenpaar bildende und im Montageendzustand das Plattenteil (24) jeweils eines Verbindungsflansches (4) zwischen sich aufnehmende und verspannende Verbindungslaschen (3,3') derart, daß die Längsverschieblichkeit der Verbindungslaschen (3,3') am Pfostenprofil (1) mit dem Verspannen des Verbindungsflansches (4) aufgehoben ist und
f) durch jeweils eine Verzahnung (17,17') auf den Innenseiten (16,16') der Verbindungslaschen (3,3') derart, daß die Verzahnungen (17,17') auf den Innenseiten (16,16') der Verbindungslaschen (3,3') im Montageendzustand in die Verzahnungen (26,26') auf den Plattenaußenseiten (25,25') des Verbindungsflansches (4) kämmend eingreifen zur Bildung einer unverschiebbaren und lagesicheren Verbindung des Verbindungsflansches (4) mit den Verbindungslaschen (3,3').

2. Fassadenkonstruktion nach Anspruch 1
dadurch gekennzeichnet,
daß der Verbindungsflansch (4) einen im wesentlichen T-förmigen Querschnitt aufweist und mit seinem, den Horizontalbalken der T-Form bildenden Flanschteil (23) am Tragpfosten (2) befestigt ist.

3. Fassadenkonstruktion nach Anspruch 2,
dadurch gekennzeichnet,
daß sich im Flanschteil (23) des Verbindungsflansches (4) eine Durchgangsbohrung (22,22') in Richtung auf den Tragpfosten (2) verlaufend erstreckt und der Verbindungsflansch (4) mittels einer die Durchgangsbohrung (22,22') durchsetzenden Halteschraube (21,21') mit dem Tragpfosten (2) verschraubt ist.

4. Fassadenkonstruktion nach Anspruch 3,
dadurch gekennzeichnet,
daß das den Vertikalbalken der T-Form bildende Plattenteil (24) des Verbindungsflansches (4) etwa rechtwinklig aus dem Tragpfosten (2) in Richtung auf die Fassadenprofilkonstruktion hinaussteht und sich die Plattenebene in Längsrichtung (6) der Tragpfosten (2) und der Pfostenprofile (1) erstreckt.

5. Fassadenkonstruktion nach einem oder mehreren der vorhergehenden Ansprüche,
gekennzeichnet durch
eine abgewandelte, im wesentlichen T-förmige Querschnittsform des Verbindungsflansches (4) derart, daß das den Horizontalbalken der T-Form bildende Flanschteil (23) eine in Richtung auf den Tragpfosten (2) konkav gekrümmte Querschnittsform aufweist, um an einem den Tragpfosten (2) bildenden Rundpfosten flächig anzuliegen.

6. Fassadenkonstruktion nach einem oder mehreren der vorhergehenden Ansprüche,
dadurch gekennzeichnet,
daß die Profilnuten (7,7') derart paarweise in die Pfostenprofile (1) eingeformt sind, daß ein Profilnutenpaar (7,7') jeweils achsensymmetrisch zur Pfostenprofillängsachse verläuft und einen im wesentlichen W-förmigen Querschnitt aufweist.

7. Fassadenkonstruktion nach Anspruch 6,
dadurch gekennzeichnet,
daß die Pfostenprofile (1) einen im wesentlichen rechteckförmigen Querschnitt aufweisen und die die W-Form begrenzenden äußeren W-Schenkel (9,9') etwa rechtwinklig an der dem Tragpfosten (2) zugewandten Pfostenprofilbefestigungsseite (11) in das Pfostenprofil (1) hineinragen.

8. Fassadenkonstruktion nach Anspruch 7,
dadurch gekennzeichnet,
daß die die äußeren W-Schenkel (9,9') verbindenden, die Querschnittsform eines auf den Kopf gestellten V's aufweisenden inneren W-Schenkel (10,10') etwa viertelkreisförmig ausgerundet sind, so daß die Schenkel (9,9'/10,10') zwei ein Profilnutenpaar (7,7') bildende, konkave Profilnuten (7,7') formen.

9. Fassadenkonstruktion nach Anspruch 8,
gekennzeichnet durch
an den Stirnseiten der äußeren W-Schenkel (9,9') angeformte, in einer Ebene mit der Pfostenprofilbefestigungsseite (11) verlaufende, einander zugewandte Vorsprünge (13,13'), welche die dem Tragpfosten (2) zugewandten Profilnutöffnungen hinterschneiden.

10. Fassadenkonstruktion nach Anspruch 9,
dadurch gekennzeichnet,
daß die Profilnuten (7,7') jeweils einen etwa viertelkreisförmigen Hohlquerschnitt aufweisen, der sich von seiner von den Vorsprüngen (13,13') hinterschnittenen Profilnutöffnung bis zu seiner von der Innenseite der äußeren W-Schenkel (9,9') gebildeten Anschlagwand vorzugsweise verjüngend erstreckt.

11. Fassadenkonstruktion nach Anspruch 10,
gekennzeichnet durch
in den Hohlquerschnitt der Profilnut (7,7') etwa rechtwinklig hineinragende Biegestege (14,14').

12. Fassadenkonstruktion nach einem oder mehreren der vorhergehenden Ansprüche,
gekennzeichnet durch
- Durchgangsbohrungen (29)
-- welche das Verbindungslaschenpaar (3,3') und das Plattenteil (24) quer (12) zu den Tragpfosten (2) und den Pfostenprofilen (1) verlaufend durchbrechen und
-- welche miteinander fluchtend nebeneinander angeordnet sind und
- eine das Verbindungslaschenpaar (3,3') und das Plattenteil (24) in den Durchgangsbohrungen (29) ebenfalls in Querrichtung (12) durchsetzende Spannschraube (28), wobei das Verbindungslaschenbaar (3,3') mit dem Verbindungsflansch (4) über eine auf die Spannschraube (28) aufschraubbare Mutter dauerhaft kraftschlüssig verspannbar ist.

13. Fassadenkonstruktion nach einem oder mehreren der vorhergehenden Ansprüche,
dadurch gekennzeichnet,
daß die den Tragpfosten (2) abgewandten Stirnseiten der Verbindungslaschen (3,3') als einen im wesentlichen hakenförmigen Querschnitt aufweisende Befestigungsenden (15,15') ausgebildet sind.

14. Fassadenkonstruktion nach Anspruch 13,
gekennzeichnet durch
einen der Viertelkreisform des Hohlquerschnitts der Profilnuten (7,7') entsprechenden, viertelkreisförmigen Profilquerschnitt der Befestigungsenden (15,15').

15. Fassadenkonstruktion nach Anspruch 14,
gekennzeichnet durch
eine Einschubstellung der Verbindungslaschen (3,3') mit quer (12) zu den Tragpfosten (2) und den Pfostenprofilen (1) verlaufenden Innen-(16,16') und Außenseiten (19,19'), wobei die Verbindungslaschen (3,3') mit ihren Befestigungsenden (15,15') in die Profilnutöffnungen einlegbar sind

16. Fassadenkonstruktion nach Anspruch 15,
gekennzeichnet durch
eine Verspannstellung der Verbindungslaschen (3,3') derart,
- daß die Innenseiten (16,16') der Verbindungslaschen (3,3') die Plattenaußenseiten (25,25') des Verbindungsflansches (4) flankieren und
- daß die Befestigungsenden (15,15') durch Verschwenken in diese Verspannstellung nach Art einer Preßpassung in den Profilnuten (7,7') verspannbar sind, wodurch die Verbindungslaschen (3,3') in Längsrichtung (6) unverschiebbar in den Pfostenprofilen (1) fixiert sind.

17. Fassadenkonstruktion nach Anspruch 11 und 16,
dadurch gekennzeichnet,
daß die Biegestege (14,14') bei in der Profilnut (7,7') vollständig einliegenden Befestigungsenden (15,15') im verspannten Zustand der Verbindungslaschen (3,3') mit dem Verbindungsflansch (4) derart deformierbar sind, daß sie im wesentlichen nicht in den Hohlquerschnitt hineinragen und unter Spannung an den Befestigungsenden (15,15') anliegen.

18. Fassadenkonstruktion nach einem oder mehreren der vorhergehenden Ansprüche,
dadurch gekennzeichnet,
daß die Verbindungslaschen (3,3') in Richtung auf die Pfostenprofile (1) im Querschnitt derart gekröpft (27,27') sind, daß ihre Wandstärke im Bereich der Durchgangsbohrungen (29) größer als im Bereich des Befestigungsendes (15,15') ist.

19. Fassadenkonstruktion nach Anspruch 18,
dadurch gekennzeichnet,
daß die Wandstärke der Verbindungslaschen (3,3') im Bereich der Durchgangsbohrungen (29) zu der Wandstärke im Bereich des Befestigungsendes ein Verhältnis von 3:2 aufweist.

20. Fassadenkonstruktion nach einem oder mehreren der vorhergehenden Ansprüche,
dadurch gekennzeichnet,
daß neben den Verzahnungen (17,17') auf den Innenseiten (16,16') der Verbindungslaschen (3,3') am Übergang zu den Befestigungsenden (15,15') zwei etwa rechtwinklig aus den Innenseiten (15,15') hinausstehende, keilförmige Klemmdorne (18,18') zur Verklemmung in den Profilnuten (7,7') angeformt sind.

## Claims

1. Facade structure
a) having a load-bearing structure containing load-bearing posts (2),
b) having a facade-profile structure which is arranged in front of the load-bearing structure, is connected to the load-bearing posts (2), and comprises post (1) and crossmember profiles, and
c) having connecting flanges (4) fastened on the load-bearing posts (2), such
aa) that the connecting flanges (4) exhibit a plate part (24) which extends in the plane defined by the post profiles (1) and the load-bearing profiles (2), and
bb) that the plate part (24) bears, on its plate outer sides (25, 25'), in each case a straight-toothing arrangement (26, 26') of which the teeth are formed by parallel profile ribs running in the longitudinal direction (6) of the load-bearing post (2) and the post profile (1),
characterized
d) by profile grooves (7, 7') which are formed in the profile sides (11) oriented towards the load-bearing posts (2) and forming part of the post profiles (1), and which run in the longitudinal direction (6) of said post profiles,
e) by in each case two connecting brackets (3, 3') which are guided longitudinally displaceably in the profile grooves (7, 7'), form a connecting-bracket pair and, in the end mounting position, receive and brace the plate part (24) of in each case one connecting flange (4) between them, such that the longitudinal displaceability of the connecting brackets (3, 3') on the post profile (1) is eliminated with the bracing of the connecting flange (4), and
f) by in each case one toothing arrangement (17, 17') on the inner sides (16, 16') of the connecting brackets (3, 3') such that, in the end mounting position, the toothing arrangements (17, 17') on the inner sides (16, 16') of the connecting brackets (3, 3') mesh with the toothing arrangements (26, 26') on the plate outer sides (25, 25') of the connecting flange (4) in order to form a connection between the connecting flange (4) and the connecting brackets (3, 3') which is non-displaceable and positionally secure.

2. Facade structure according to Claim 1, characterized in that the connecting flange (4) has an essentially T-cross-section and is fastened on the load-bearing post (2) by means of its flange part (23) which forms the horizontal bar of the T-shape.

3. Facade structure according to Claim 2, characterized in that a through-passage bore (22, 22') extends in the flange part (23) of the connecting flange (4) such that it runs in the direction of the load-bearing post (2), and the connecting flange (4) is screwed to the load-bearing post (2) by means of a retaining screw (21, 21') which passes through the through-passage bore (22, 22').

4. Facade structure according to Claim 3, characterized in that the plate part (24), which forms the vertical bar of the T-shape, of the connecting flange (4) projects at approximately right angles from the load-bearing post (2) in the direction of the facade-profile structure, and the plate plane extends in the longitudinal direction (6) of the load-bearing posts (2) and of the post profiles (1).

5. Facade structure according to one or more of the preceding claims, characterized by a modified, essentially T-shaped cross-sectional form of the connecting flange (4) such that the flange part (23), which forms the horizontal bar of the T-shape, is of a cross-sectional form which is curved in a concave manner in the direction of the load-bearing post (2) in order to rest with surface contact against a round post which forms the load-bearing post (2).

6. Facade structure according to one or more of the preceding claims, characterized in that the profile grooves (7, 7') are formed in pairs in the post profiles (1) such that a profile-groove pair (7, 7') runs in each case with axis symmetry with respect to the post-profile longitudinal axis and has an essentially W-shaped cross-section.

7. Facade structure according to Claim 6, characterized in that the post profiles (1) have an essentially rectangular cross-section, and the outer W-legs (9, 9') which bound the W-shape project approximately at right angles into the post profile (1) on the post-profile fastening side (11) oriented towards the load-bearing post (2).

8. Facade structure according to Claim 7, characterized in that the inner W-legs (10, 10'), which connect the outer W-legs (9, 9') and have the cross-sectional form of an upside-down V, are rounded off approximately in the form of a quarter-circle, with the result that the legs (9, 9'/10, 10') form two concave profile grooves (7, 7') which form a profile-groove pair (7, 7').

9. Facade structure according to Claim 8, characterized by mutually facing protrusions (13, 13') which are integrally formed on the end sides of the outer W-legs (9, 9'), run in one plane with the post-profile fastening side (11), and undercut the profile-groove openings oriented towards the load-bearing post (2).

10. Facade structure according to Claim 9, characterized in that the profile grooves (7, 7') each have a hollow cross-section which is approximately in the form of a quarter-circle and extends, preferably in a tapering manner, from its profile-groove opening, undercut by the protrusions (13, 13'), to its stop wall formed by the inner side of the outer W-legs (9, 9').

11. Facade structure according to Claim 10, characterized by bending webs (14, 14') which project approximately at right angles into the hollow cross-section of the profile groove (7, 7').

12. Facade structure according to one or more of the preceding claims, characterized by
- through-passage bores (29)
-- which pass through the connecting-bracket pair (3, 3') and the plate part (24) transversely with respect to the load-bearing posts (2) and the post profiles (1) and
-- which are arranged one beside the other such that they are aligned with one another, and
- a tightening screw (28) which passes through the connecting-bracket pair (3, 3') and the plate part (24) in the through-passage bores (29), likewise in the transverse direction (12), it being possible for the connecting-bracket pair (3, 3') to be braced in a permanently frictionally locking manner with the connecting flange (4) via a nut which can be screwed onto the tightening screw (28).

13. Facade structure according to one or more of the preceding claims, characterized in that those end sides of the connecting brackets (3, 3') which are remote from the load-bearing posts (2) are designed as fastening ends (15, 15') having an essentially hooked-shaped cross-section.

14. Facade structure according to Claim 13, characterized by a profile cross-section of the fastening ends (15, 15') which is in the form of a quarter-circle and corresponds to the quarter-circle shape of the hollow cross-section of the profile grooves (7, 7').

15. Facade structure according to Claim 14, characterized by an insertion position of the connecting brackets (3, 3') with inner sides (16, 16') and outer sides (19, 19') running transversely (12) with respect to the load-bearing posts (2) and the post profiles (1), it being possible for the connecting brackets (3, 3') to be inserted into the profile-groove openings by means of their fastening ends (15, 15').

16. Facade structure according to Claim 15, characterized by a bracing position of the connecting brackets (3, 3') such
- that the inner sides (16, 16') of the connecting brackets (3, 3') flank the plate outer sides (25, 25') of the connecting flange (4), and
- that, by pivoting them into said bracing position, the fastening ends (15, 15') can be braced in the profile grooves (7, 7') in the manner of a press fit, as a result of which the connecting brackets (3, 3') are fixed in the post profiles (1) such that they cannot be displaced in the longitudinal direction (6).

17. Facade structure according to Claims 11 and 16, characterized in that, when the fastening ends (15, 15') are fully inserted into the profile groove (7, 7') in the braced state of the connecting brackets (3, 3') with the connecting flange (4), the bending webs (14, 14') can be deformed such that they essentially do not project into the hollow cross-section and they rest against the fastening ends (15, 15') under stress.

18. Facade structure according to one or more of the preceding claims, characterized in that the connecting brackets (3 3') are cross-sectionally offset (27, 27') in the direction of the post profiles (1) such that their wall thickness is greater in the region of the through-passage bores (29) than in the region of the fastening end (15, 15').

19. Facade structure according to Claim 18, characterized in that the ratio of the wall thickness of the connecting brackets (3, 3') in the region of the through-passage bores (29) to the wall thickness in the region of the fastening end is 3:2.

20. Facade structure according to one or more of the preceding claims, characterized in that integrally formed next to the toothing arrangements (17, 17') on the inner sides (16, 16') of the connecting brackets (3, 3'), at the transition to the fastening ends (15, 15'), are two wedge-shaped clamping spikes (18, 18') which project approximately at right angles from the inner sides (16, 16') and are intended for clamping in the profile grooves (7, 7').

## Revendications

1. Construction de façade comprenant :
a) une construction de support comprenant des montants de support (2),
b) une construction de profilés de façade constituée par des profilés de montant (1) et des profilés de traverse, posée devant la construction de support et reliée aux montants de support (2), et
c) des brides de liaison (4) fixées sur les montants de support (2) de telle sorte que :
aa) les brides de liaison (4) présentent une partie de plaque (24) s'étendant dans le plan tendu entre les profilés de montant (1) et les montants de support (2), et
bb) la partie de plaque (24) porte sur ses faces extérieures (25, 25') une denture droite respective (26, 26'), dont les dents sont formées par des nervures profilées parallèles s'étendant en direction longitudinale (6) du montant de support (2) et du profilé de montant (1),
caractérisée par :
d) des rainures profilées (7, 7') formées dans les faces profilées (11) des profilés de montant (1), qui sont orientées vers les montants de support (2), et s'étendent dans leur direction longitudinale (6),
e) deux pattes de liaison (3, 3') respectives guidées de manière mobile longitudinalement dans les rainures profilées (7, 7'), formant une paire de pattes de liaison et recevant et serrant entre elles, à l'état final de montage, la partie de plaque (24) d'une bride de liaison respective (4), de telle sorte que la mobilité en direction longitudinale des pattes de liaison (3, 3') sur le profilé de montant (1) est supprimée par le serrage de la bride de liaison (4), et
f) une denture respective (17, 17') sur les faces intérieures (16, 16') des pattes de liaison (3, 3'), de telle sorte que les dentures (17, 17') sur les faces intérieures (16, 16') des pattes de liaison (3, 3') engrènent à l'état final de montage dans les dentures (26, 26') sur les faces extérieures (25, 25') de la bride de liaison (4), pour la formation d'une liaison inamovible et sûre en position de la bride de liaison (4) avec les pattes de liaison (3, 3').

2. Construction de façade selon la revendication 1, caractérisée en ce que la bride de liaison (4) présente une section transversale sensiblement en forme de T, et est fixée sur le montant de support (2) par sa partie de bride (23) formant la branche horizontale de la forme en T.

3. Construction de façade selon la revendication 2, caractérisée en ce qu'un perçage traversant (22, 22') s'étend dans la partie de bride (23) de la bride de liaison (4) en direction du montant de support (2), et en ce que la bride de liaison (4) est vissée au montant de support (2) au moyen d'une vis de maintien (21, 21') qui traverse le perçage traversant (22, 22').

4. Construction de façade selon la revendication 3, caractérisée en ce que la partie de plaque (24) de la bride de liaison (4), qui forme la branche verticale de la forme en T, dépasse approximativement perpendiculairement du montant de support (2) en direction de la construction de profilés de façade, et en ce que le plan de plaque s'étend dans la direction longitudinale (6) des montants de support (2) et des profilés de montant (1).

5. Construction de façade selon l'une ou plusieurs des revendications précédentes, caractérisée par une forme de section transversale modifiée, sensiblement en forme de T, de la bride de liaison (4) de telle manière que la partie de bride (23) qui forme la branche horizontale de la forme en T présente une forme en section transversale coudée de manière concave en direction du montant de support (2), de manière à s'appuyer à plat contre un montant rond qui forme le montant de support (2).

6. Construction de façade selon l'une ou plusieurs des revendications précédentes, caractérisée en ce que les rainures profilées (7, 7') sont formées par paires dans les profilés de montant (1), de telle manière qu'une paire de rainures profilées (7, 7') respectives s'étend symétriquement par rapport à l'axe longitudinal du profilé de montant, et présente une section transversale sensiblement en forme de W.

7. Construction de façade selon la revendication 6, caractérisée en ce que les profilés de montant (1) présentent une section transversale sensiblement rectangulaire et les branches externes du W (9, 9') délimitant la forme en W pénètrent dans le profilé de montant (1) sensiblement perpendiculairement sur la face de fixation du profilé de montant (11) tournée vers le montant de support (2).

8. Construction de façade selon la revendication 7, caractérisée en ce que les branches internes du W (10, 10') qui relient les branches externes du W (9, 9') et qui ont en section transversale la forme d'un V inversé, sont arrondies intérieurement sensiblement sous forme de quarts de cercle, de sorte que les branches (9, 9'/10, 10') forment deux rainures profilées concaves (7, 7') formant une paire de rainures profilées (7, 7').

9. Construction de façade selon la revendication 8, caractérisée par des saillies (13, 13') tournée l'une vers l'autre, formées sur les faces frontales des branches externes (9, 9') du W, qui s'étendent dans un plan avec la face de fixation de profilé de montant (11), et qui sont en contre-dépouille par rapport aux ouvertures des rainures profilées tournées vers le montant de support (2).

10. Construction de façade selon la revendication 9, caractérisée en ce que les rainures profilées (7, 7') présentent chacune une section transversale creuse sensiblement en forme de quart de cercle qui s'étend depuis son ouverture de rainure profilée en contre-dépouille par rapport aux saillies (13, 13') jusqu'à sa paroi de butée formée par la face intérieure des branches externes du W (9, 9'), de préférence en se rétrécissant.

11. Construction de façade selon la revendication 10, caractérisé par des barrettes de flexion (14, 14') qui pénètrent sensiblement à angle droit dans la section transversale creuse de la rainure profilée (7, 7').

12. Construction de façade selon l'une ou plusieurs des revendications précédentes, caractérisée par :
- des perçages traversants (29)
-- qui traversent de manière continue la paire de pattes de liaison (3, 3') et la partie de plaque (24) transversalement (12) par rapport aux montants de supports (2) et aux profilés de montant (1), et
-- qui sont agencés côte à côte en étant alignés entre eux, et
- une vis de serrage (28) qui traverse également en direction transversale (12) la paire de pattes de liaison (3, 3') et la partie de plaque (24) dans les perçages traversants (29), la paire de pattes de liaison (3, 3') pouvant être serrée avec la bride de liaison (4) durablement par coopération de forces au moyen d'un écrou vissé sur la vis de serrage (28).

13. Construction de façade selon l'une ou plusieurs des revendications précédentes, caractérisée en ce que les faces frontales des pattes de liaison (3, 3'), qui sont détournées des montants de support (2), sont réalisées sous la forme d'extrémités de fixation (15, 15') présentant une section transversale sensiblement en forme de crochet.

14. Construction de façade selon la revendication 13, caractérisé en ce que les extrémités de fixation (15, 15') présentent en section transversale une forme de quart de cercle, qui correspond à la forme de quart de cercle de la section transversale creuse des rainures profilées (7, 7').

15. Construction de façade selon la revendication 14, caractérisée par une position d'introduction des pattes de liaison (3, 3') avec des faces intérieures (16, 16') et des faces extérieures (19, 19') s'étendant transversalement (12) aux montants de support (2) et aux profilés de montant (1), les pattes de liaison (3, 3') pouvant être posées par leurs extrémités de fixation (15, 15') dans les ouvertures des rainures profilées.

16. Construction de façade selon la revendication 15, caractérisée par une position de serrage des pattes de liaison (3, 3') de telle sorte que
- les faces intérieures (16, 16') des pattes de liaison (3, 3') flanquent les faces extérieures de plaque (25, 25') de la bride de liaison (4), et
- les extrémités de fixation (15, 15') peuvent être serrées dans les rainures profilées (7, 7') par pivotement dans cette position de serrage en vue d'un ajustage serré, grâce à quoi les pattes de liaison (3, 3') sont fixées dans les profilés de montant (1) de manière immobile en direction longitudinale (6).

17. Construction de façade selon les revendications 11 et 16, caractérisée en ce que, lorsque les extrémités de fixation (15, 15') sont situées totalement dans la rainure profilée (7, 7'), à l'état serré des pattes de liaison (3, 3') avec la bride de liaison (4), les barrettes de flexion (14, 14') sont déformables de telle sorte qu'elles ne pénètrent sensiblement pas dans la section transversale creuse et qu'elles s'appuient sous précontrainte contre les extrémités de fixation (15, 15').

18. Construction de façade selon l'une ou plusieurs des revendications précédentes, caractérisée en ce que les pattes de liaison (3, 3') sont coudées (27, 27') en section transversale en direction des profilés de montant (1) de telle sorte que l'épaisseur de leur paroi est plus grande dans la région des perçages traversants (29) que dans la région de l'extrémité de fixation (15, 15').

19. Construction de façade selon la revendication 18, caractérisée en ce que l'épaisseur de paroi des pattes de liaison (3, 3') dans la région des perçages traversants (29) présente par rapport à l'épaisseur de paroi dans la région de l'extrémité de fixation un rapport de 3 : 2.

20. Construction de façade selon l'une ou plusieurs des revendications précédentes, caractérisée en ce que deux ergots de blocage (18, 18') en forme de coin, qui font saillie sensiblement perpendiculairement depuis les faces intérieures (15, 15') pour le blocage dans les rainures profilées (7, 7'), sont formés à côté des dentures (17, 17') sur les faces intérieures (16, 16') des pattes de liaison (3, 3') au niveau de la transition vers les extrémités de fixation (15, 15').
